# EUROPEAN PATENT SPECIFICATION

(11) **EP 2 910 611 B1**
(45) Date of publication and mention of the grant of the patent: **07.12.2016**
(21) Application number: 15155844.2
(22) Date of filing: 19.02.2015
(51) Int. Cl.: C09C 1/48, C09C 1/56, C08G 73/10, C08L 79/08, C08G 73/22

(54) **CARBON BLACK DISPERSION**
RUßSCHWARZDISPERSION
DISPERSION DE NOIR DE CARBONE

(30) Priority: 21.02.2014 JP 2014031634; 27.06.2014 JP 2014133376; 03.02.2015 JP 2015019727
(43) Date of publication of application: 26.08.2015
(73) Proprietor: TOKYO OHKA KOGYO CO., LTD., Kawasaki-shi, Kanagawa 211-0012 (JP)
(72) Inventor: Shiota, Dai, Kanagawa, 211-0012 (JP); Noda, Kunihiro, Kanagawa, 211-0012 (JP); Chisaka, Hiroki, Kanagawa, 211-0012 (JP)
(74) Representative: Cabinet Plasseraud

(56) References cited:
- WO-A1-2012/176694
- WO-A1-2013/157568
- US-A1- 2009 246 392
- US-A1- 2012 207 999
- YOSHIOKA MASAHIRO ET AL: "Resin Black Matrix for Color Filters", IDW, FMC5-3, LONDON UK, 1 January 1999 (1999-01-01), pages 371-374, XP007014166,
- KANETAKE J ET AL: "Mfr. of cylindrical polyimide film for transcription toner of copying machine - comprises dispersing ferro-electric barium titanate powder in polyimide resin with acetylene black, and treating resulting polyamic acid film at high temp. for imide ring closure", WPI / THOMSON, 9 July 1996 (1996-07-09), XP002441419,

## Description

### BACKGROUND OF THE INVENTION

### Field of the Invention

The present invention relates to a manufacturing method of a carbon black dispersion, a black curable composition containing the carbon black dispersion, and a dispersion method of carbon black.

### Related Art

A carbon black dispersion is conventionally used for coloring a liquid composition such as ink as well as various resin compositions black. The compositions being colored by using the carbon black dispersion are used not only for printing and painting applications, but also as a material for forming a light shielding member such as a black matrix and a black column spacer in various display panels.

The carbon black dispersion is often manufactured by dispersing carbon black using a dispersant in a solvent such as an organic solvent. As an example of a manufacturing method of such a carbon black dispersion, a method of dispersing carbon black in an organic solvent such as alcohol, a glycol-based solvent, ketones, and an aprotic polar organic solvent by using a low molecular weight compound such as an organic dye derivative and a triazine derivative as a dispersant is known (Japanese Unexamined Patent Application Publication No. 2005-213405).

WO 2013/157568 discloses a coating film including (A) a polyamic acid, (B) an agent for imparting conductivity such as a carbon black and (C) an imidation accelerator. The agent for imparting conductivity (B) is included in an amount of 1 to 50 parts by weight based on 100 parts by weight of the polyamic acid (A).

### SUMMARY OF THE INVENTION

However, in the method disclosed in the above cited Publication, carbon black may not be dispersed preferably or may take an extended period of time to be dispersed preferably, depending on a combination of the dispersant and the organic solvent. In addition, in a case of using the carbon black obtained by the method disclosed in the above cited Publication for coloring various compositions, a resulting black composition may have poor thermal resistance due to use of a dispersant which is poor in thermal resistance.

The present invention has been made in view of the abovementioned problems and is aimed at providing a carbon black dispersion containing preferably dispersed carbon black and providing a black composition superior in thermal resistance. In addition, the present invention is aimed at providing a black composition giving a black shaped body which is colored in black of a desired density and superior in thermal resistance. Furthermore, the present invention is aimed at providing a dispersion method of carbon black that allows preferable dispersion of carbon black in a short period of time, and preparation of a carbon black dispersion which gives a black composition superior in thermal resistance.

The present inventors have found that the abovementioned problems can be solved by dispersing carbon black by using polyamic acid in a solvent containing N,N,N',N'-tetramethyl urea, leading to completion of the present invention.

In a first aspect of the present invention, a carbon black dispersion includes: carbon black; polyamic acid; and a solvent containing N,N,N',N'-tetramethyl urea, in which a carbon black content in a solid content is 50 to 99% by mass.

In a second aspect of the present invention, a black composition includes a base material and the carbon black dispersion of the first aspect, in which the carbon black content in a solid content is 0.1 to 40% by mass.

In a third aspect of the present invention, a dispersion method of carbon black includes: blending carbon black and polyamic acid into a solvent containing N,N,N',N'-tetramethyl urea such that the carbon black content in a solid content is 50 to 99% by mass; and then dispersing the carbon black in the solvent.

According to the present invention, a carbon black dispersion containing preferably dispersed carbon black and giving a black composition superior in thermal resistance can be provided. In addition, according to the present invention, a black composition giving a black shaped body which is colored in black of a desired density and superior in thermal resistance can be provided. Furthermore, according to the present invention, a dispersion method of carbon black that allows preferable dispersion of carbon black in a short period of time, and preparation of a carbon black dispersion which gives a black composition superior in thermal resistance can be provided.

### DETAILED DESCRIPTION OF THE INVENTION

### Carbon Black Dispersion

A carbon black dispersion contains: carbon black; polyamic acid; and a solvent containing N,N,N',N'-tetramethyl urea. The carbon black content in a solid content of the carbon black dispersion is 50 to 99% by mass; preferably 65 to 99% by mass; and more preferably 70 to 99% by mass. Hereinafter, essential and optional components of the carbon black dispersion are described in order.

### (Carbon Black)

A type of carbon black to be dispersed in the dispersion is not particularly limited and various conventionally marketed carbon black can be used with no particular restriction.

A preferable carbon is that which has been processed to introduce an acidic group, for higher insulation properties of a black composition prepared by using the carbon black dispersion and a black article formed by using the black composition.

In this case, the acidic group to be introduced to the carbon black is a functional group which is acidic according to the definition by Bronsted. Specific examples of the acidic group include a carboxyl group, a sulfonic group, and a phosphonic group. The acidic group introduced to the carbon black may form a salt. Cation forming the salt with the acidic group and the salt is not particularly limited as long as it does not interfere with the objective of the present invention. As an example of the cation, various metal ions, cations of a nitrogen-containing compound, ammonium ions and the like can be exemplified, and alkali metal ions such as sodium ions, potassium ions, and lithium ions as well as ammonium ions are preferable.

Among the above described carbon black having been processed to introduce an acidic group, carbon black having at least one functional group selected from a group consisting of a carboxylic acid group, a carboxylic acid salt group, a sulfonic group, and a sulfonic acid salt group is preferable, for higher insulation properties of a black composition prepared by using the carbon black dispersion and an article formed by using the black composition.

A method of introducing an acidic group to the carbon black is not particularly limited. As a method of introducing an acidic group, for example, the following methods may be exemplified:
1) A method of introducing a sulfonic group to the carbon black by means of direct substitution using strong sulfuric acid such as fuming sulfuric acid and chlorosulfonic acid, or indirect substitution using sulfite, hydrogen sulfite and the like;
2) A method of diazo-coupling an organic compound having an amino group and an acidic group with the carbon black;
3) A method of reacting an organic compound having a halogen atom and an acidic group with the carbon black having a hydroxyl group, by the Williamson etherification method;
4) A method of reacting an organic compound having a halo carbonyl group and an acidic group protected by a protecting group with the carbon black having a hydroxyl group; and
5) A method of performing Friedel-Crafts reaction on the carbon black using an organic compound having a halo carbonyl group and an acidic group protected by a protecting group and then deprotecting.

Among these methods, the method 2), allowing easy and safe introduction of an acidic group, is preferable. As the organic compound having an amino group and an acidic group used in the method 2), a compound in which an amino group and an acidic group are bound to an aromatic group is preferable. As such a compound, aminobenzenesulfonic acid such as sulfanilic acid and aminobenzoic acid such as 4-aminobenzoic acid can be exemplified.

A molar number of the acidic group to be introduced to the carbon black is not particularly limited as long as it does not interfere with the objective of the present invention. A molar number of the acidic group to be introduced to the carbon black is preferably 1 to 200 mmol and more preferably 5 to 100 mmol with respect to 100 g of carbon black.

In addition, the carbon black may have been processed by a silane coupling agent, in order to improve adhesion of a black shaped body, which is formed by using the black composition containing the carbon black, with respect to various base materials. The process by a silane coupling agent can take place either before or after a process of introducing the acidic group to the carbon black, and either before or after a process of dispersing by using polyamic acid as a dispersant.

The silane coupling agent used for the process of carbon black can be appropriately selected from conventionally known silane coupling agents. A preferred silane coupling agent used for the process of carbon black is that represented by the following formula (I).

R¹ₐR²₍₃₋ₐ₎Si-R³-NH-C(O)-Y-R⁴-X ... (I)

(wherein R¹ is an alkoxy group; R² is an alkyl group; a is an integer of 1 to 3; R³ is an alkylene group; Y is -NH-, -O-, or -S-; R⁴ is a single bond or an alkylene group; X is a nitrogen-containing heteroaryl group which can have a substituent group or be monocyclic or polycyclic; a ring bound to -Y-R⁴- in X is a nitrogen containing six-membered aromatic ring; and -Y-R⁴- is bound to a carbon atom in the nitrogen containing six-membered aromatic ring.)

In the formula (I), R¹ is an alkoxy group. For R¹, the number of carbon atoms in the alkoxy group is preferably 1 to 6; more preferably 1 to 4; and particularly preferably 1 or 2 from the viewpoint of reactivity of the silane coupling agent. As a preferred example of R¹, a methoxy group, an ethoxy group, an n-propoxy group, an isopropoxy group, an n-butoxy group, an isobutoxy group, a sec-butoxy group, a tert-butoxy group, an n-pentyloxy group and an n-hexyloxy group can be exemplified. Among these alkoxy groups, a methoxy group and an ethoxy group are preferable.

By reacting a silanol group, which is generated by hydrolysis of an alkoxy group R¹, with a functional group including an active hydrogen atom such as a hydroxyl group, a carboxyl group and the like, the silane coupling agent is bound to a surface of the carbon black. For this reason, a is preferably 3 from a viewpoint of easy binding of the silane coupling agent to the surface of the carbon black.

In the formula (I), R² is an alkyl group. For R², the number of carbon atoms in the alkyl group is preferably 1 to 12; more preferably 1 to 6; and particularly preferably 1 or 2 from the viewpoint of reactivity of the silane coupling agent. As a preferred example of R², a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, an n-nonyl group, an n-decyl group, an n-undecyl group, and an n-dodecyl group can be exemplified.

In the formula (I), R³ is an alkylene group. For R³, the number of carbon atoms in the alkylene group is preferably 1 to 12; more preferably 1 to 6; and particularly preferably 2 to 4. As a preferred example of R³, a methylene group, a 1,2-ethylene group, a 1,1-ethylene group, a propan-1,3-diyl group, a propan-1,2-diyl group, a propan-1,1-diyl group, a propan-2,2-diyl group, a butan-1,4-diyl group, a butan-1,3-diyl group, a butan-1,2-diyl group, a butan-1,1-diyl group, a butan-2,2-diyl group, a butan-2,3-diyl group, a pentan-1,5-diyl group, a pentan-1,4-diyl group and a hexan-1,6-diyl group, a heptane-1,7-diyl group, an octane-1,8-diyl group, a nonane-1,9-diyl group, a decane-1,10-diyl group, an undecane-1,11-diyl group and a dodecane-1,12-diyl group can be exemplified. Among these alkylene groups, a 1,2-ethylene group, a propan-1,3-diyl group, and a butan-1,4-diyl group are preferable.

Y is -NH-, -O- or -S-, and preferably -NH-. This is because a bond represented by -CO-NH- is more resistant to hydrolysis than a bond represented by -CO-O- or -CO-S-. In the carbon black processed by using a compound in which Y is -NH-as a silane coupling agent, the structure of the silane coupling agent is not easily changed by action of acids and bases, and a desired effect of using the silane coupling agent can be easily obtained.

R⁴ is a single bond or an alkylene group, and is preferably a single bond. In a case in which R⁴ is an alkylene group, preferable examples are the same as those listed for R³.

X is a nitrogen-containing heteroaryl group which can have a substituent group or be monocyclic or polycyclic; a ring bound to -Y-R⁴- in X is a nitrogen containing six-membered aromatic ring; and -Y-R⁴- is bound to a carbon atom in the nitrogen containing six-membered aromatic ring. For an unknown reason, use of a black composition containing a compound with such X as a silane coupling agent allows formation of a black shaped body superior in adhesion to a base material, water resistance, and solvent resistance.

In a case in which X is a polycyclic heteroaryl group, the heteroaryl group can be either a group in which a plurality of monocycles are condensed, or a group in which a plurality of monocycles are bound via a single bond. In a case in which X is a polycyclic heteroaryl group, the number of rings included in the polycyclic heteroaryl group is preferably 1 to 3. In a case in which X is a polycyclic heteroaryl group, a ring which is condensed or bound to the nitrogen containing six-membered aromatic ring in X can be with or without a hetero atom, and can be either an aromatic ring or not.

A substituent that X, which is a nitrogen-containing heteroaryl group, can have includes: an alkyl group with 1 to 6 carbon atoms; an alkoxy group with 1 to 6 carbon atoms; an alkenyl group with 2 to 6 carbon atoms; an alkenyloxy group with 2 to 6 carbon atoms; an aliphatic acyl group with 2 to 6 carbon atoms; a benzoyl group; a nitro group; a nitroso group; an amino group; a hydroxy group; a mercapto group; a cyano group; a sulfonic group; a carboxyl group; a halogen atom; and the like. The number of substituents that X has is not particularly limited as long as it does not interfere with the objective of the present invention. The number of substituents that X has is preferably no greater than 5 and more preferably no greater than 3. In a case in which X has a plurality of substituents, the substituents can be either identical or different.

A preferable example of X includes groups in the following formula.

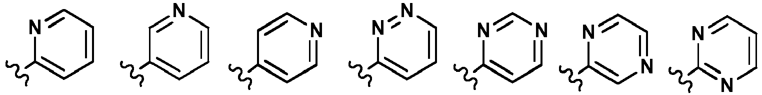

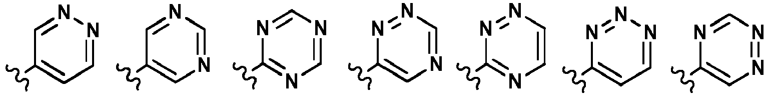

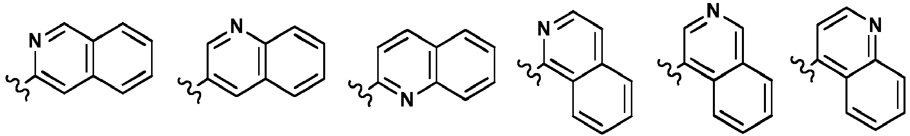

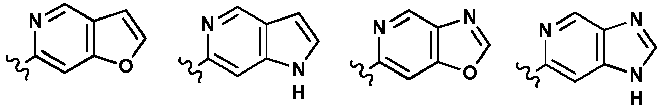

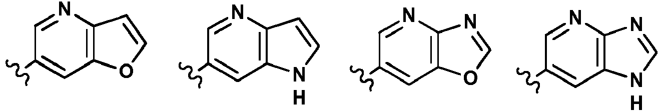

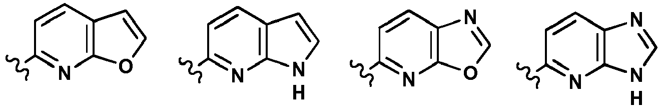

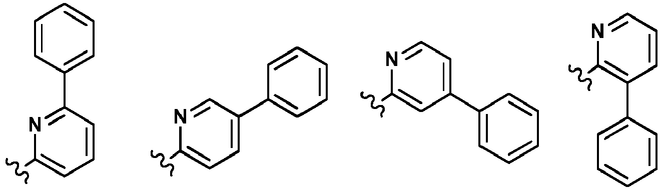

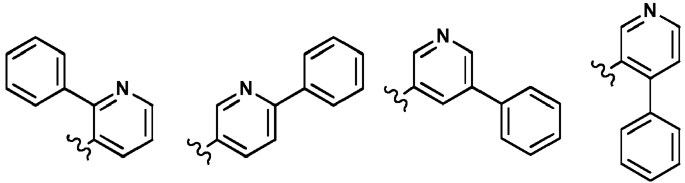

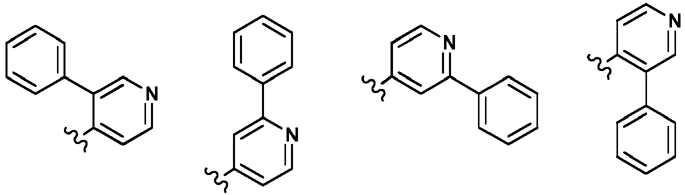

Among the above groups, the groups in the following formula are more preferable as X.

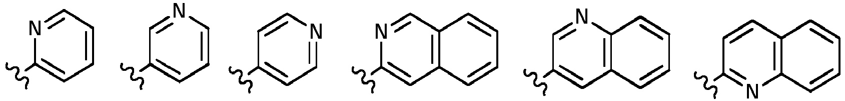

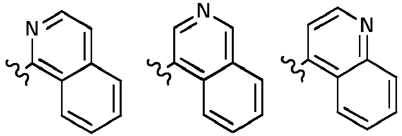

Specific preferred examples of the compound represented by the formula (I) described above include the following compounds 1 to 8.

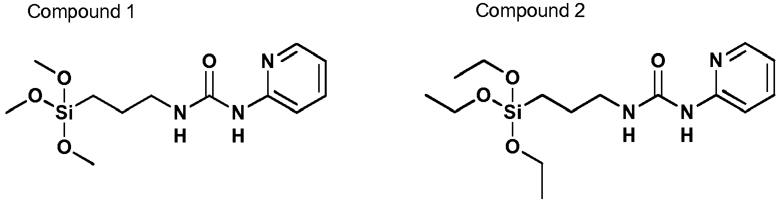

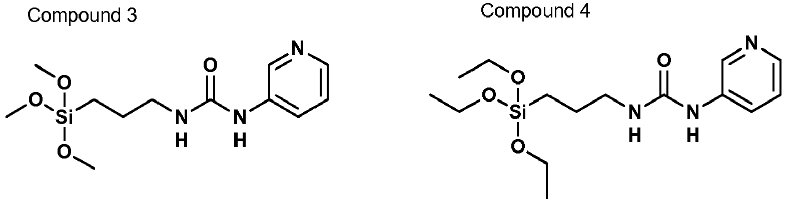

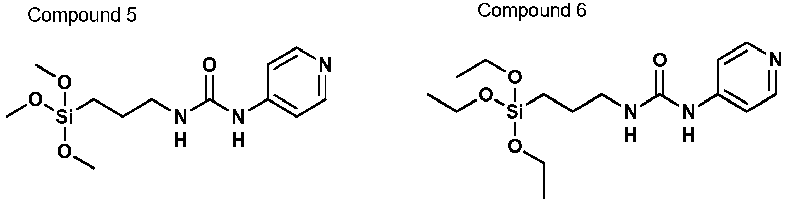

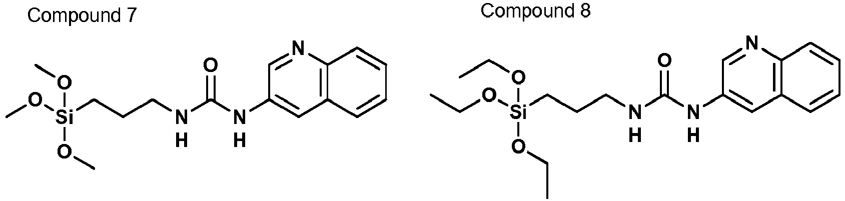

A method of processing the carbon black by the silane coupling agent is not particularly limited, and the process by the silane coupling agent is performed according to a well-known method. Typically, a method of reacting the carbon black with the silane coupling agent in an organic solvent in which the silane coupling agent is soluble, in the presence of water is preferable.

An amount of the silane coupling agent to be used is not particularly limited as long as a desired effect can be provided. The amount of the silane coupling agent to be used is preferably 0.5 to 15 parts by mass and more preferably 3 to 7 parts by mass with respect to 100 parts by mass of the carbon black.

The carbon black is processed by the silane coupling agent in the presence of water. Water can be added to a processing liquid containing the carbon black and the silane coupling agent; however, water is not required to be added to the processing liquid. In a case in which the process by the silane coupling agent is performed under an air atmosphere containing a sufficient amount of moisture, the moisture in the air hydrolyzes the alkoxy group in the silane coupling agent and generates a silanol group.

Temperature for the process of the carbon black by the silane coupling agent is not particularly limited as long as the reaction between the silane coupling agent and the carbon black proceeds preferably. The carbon black is processed by the silane coupling agent typically at 25 to 100°C.

The above described carbon black is blended with polyamic acid (described later) and a solvent containing N,N,N',N'-tetramethyl urea, such that a carbon black content in a solid content is 50 to 99% by mass, to thereby give a carbon black dispersion.

By dispersing carbon black in a solvent containing N,N,N',N'-tetramethyl urea with the polyamic acid, dispersion without aggregation of the carbon black is realized in a short period of time. A smaller dispersed particle size indicates better dispersion without aggregation of carbon black, and dispersion is to be performed such that the dispersed particle size is no greater than 99 nm.

### [Polyamic Acid]

Polyamic acid is used as a dispersant for dispersing the carbon black. A molecular chain of the polyamic acid is considered to bind to a surface of a carbon black primary particle as a result of hydrogen bonding or a mutual effect such as an intermolecular force with respect to the carbon black surface. Given this, the molecular chain of the polyamic acid is considered to function as a spacer on the surface of the carbon black primary particle, to thereby facilitate and stabilize dispersion of the carbon black.

It is preferable that the carbon black dispersion does not contain a resin component other than the polyamic acid. If the carbon black dispersion contains a resin component other than the polyamic acid, an aggregate of the carbon black primary particles is covered with the resin and it may be difficult to disperse the carbon black, since decomposition of the aggregate is difficult and absorption of polyamic acid molecules onto the surface of the carbon black primary particle is inhibited.

Molecular weight (mass average molecular weight) of the polyamic acid is preferably 5,000 to 30,000, and more preferably 10,000 to 20,000. The molecular weight of the polyamic acid within such a range allows preferable dispersion of the carbon black with such an amount of the polyamic acid that characteristics of various compositions to which the carbon black dispersion is added are not heavily influenced.

An amount of the polyamic acid to be used is not particularly limited as long as the carbon black content in a solid content of the carbon black dispersion is 50 to 99% by mass. From the viewpoint of easy dispersion of the carbon black, the amount of the polyamic acid to be used is preferably 20 to 80 parts by mass, and more preferably 30 to 70 parts by mass with respect to 100 parts by mass.

As a preferred polyamic acid, polyamic acid consisting of a constituent unit represented by the following formula (1) can be exemplified. 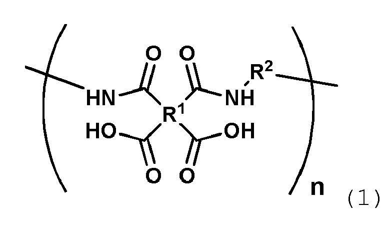 (In the formula (1), R¹ is a tetravalent organic group; R² is a divalent organic group; and n is the number of repetitions of the constituent unit represented by the formula (1).)

In the formula (1), R¹ and R² are both tetravalent organic groups, of which number of carbon atoms is preferably 2 to 50, and more preferably 2 to 30. Each of R¹ and R² can be either an aliphatic group, an aromatic group, or a group with a combination of these structures. R¹ and R² can include, in addition to a carbon atom and a hydrogen atom, a halogen atom, an oxygen atom, and a sulfur atom. In a case in which R¹ and R² include an oxygen atom, a nitrogen atom or a sulfur atom, the oxygen atom, the nitrogen atom or the sulfur atom can be included in R¹ and R² as a group selected from: a nitrogen-containing heterocyclic group; -CONH-; -NH-; -N=N-; -CH=N-; - COO-; -O-; -CO-; -SO-; -SO₂-; -S-; and -S-S-, and more preferably included in R¹ and R² as a group selected from: -O-; -CO-; -SO-; -SO₂-; -S-; and -S-S-.

Polyamic acid is generally prepared by reacting a tetracarboxylic dianhydride component with a diamine component. Hereinafter, the tetracarboxylic dianhydride component and the diamine component used for preparation of the polyamic acid, and a manufacturing method of the polyamic acid are described.

### (Tetracarboxylic Dianhydride Component)

The tetracarboxylic dianhydride component, which is a synthesis material for the polyamic acid, is not particularly limited as long as it can generate the polyamic acid by reacting with the diamine component. The tetracarboxylic dianhydride component can be appropriately selected from tetracarboxylic dianhydrides which are conventionally used as a synthesis material for the polyamic acid. The tetracarboxylic dianhydride component can be either an aromatic tetracarboxylic dianhydride or an aliphatic tetracarboxylic dianhydride; however, an aromatic tetracarboxylic dianhydride is preferable. The tetracarboxylic dianhydride component can be used either singly or in combination of two or more.

Specific examples of preferred aromatic tetracarboxylic dianhydride include: pyromellitic dianhydride; 3,3',4,4'-biphenyl tetra carboxylic dianhydride; 2,3,3',4'-biphenyl tetra carboxylic dianhydride; 3,3',4,4'-benzophenone tetra carboxylic dianhydride; 4,4'-oxydiphthalic anhydride; 3,3',4,4'-diphenyl sulfone tetra carboxylic dianhydride; and the like. Among these, 3,3',4,4'-biphenyl tetra carboxylic dianhydride is preferable from the viewpoint of price, availability, and the like.

### (Diamine Component)

The diamine component, which is a synthesis material for the polyamic acid, is not particularly limited as long as it can generate the polyamic acid by reacting with the tetracarboxylic dianhydride component. The diamine component can be appropriately selected from diamines which are conventionally used as a synthesis material for the polyamic acid. The diamine component can be either an aromatic diamine or an aliphatic diamine; however, an aromatic diamine is preferable. The diamine component can be used either singly or in combination of two or more.

Specific examples of preferred aromatic diamine include: p-phenylenediamine; m-phenylenediamine; 2,4-diamino toluene; 4,4'-diamino biphenyl; 4,4'-diamino-2,2'-bis (trifluoromethyl) biphenyl; 3,3'-diaminodiphenyl sulfone; 4,4'-diaminodiphenyl sulfone; 4,4'-diaminodiphenyl sulfide; 4,4'-diaminodiphenylmethane; 4,4'-diamino diphenyl ether; 3,4'-diamino diphenyl ether; 3,3'-diamino diphenyl ether; 1,4-bis (4-aminophenoxy) benzene; 1,3-bis (4-aminophenoxy) benzene; 1,3-bis (3-aminophenoxy) benzene; 4,4'-bis (4-aminophenoxy) biphenyl; bis[4-(4-aminophenoxy) phenyl] sulfone; bis[4-(3-aminophenoxy) phenyl] sulfone; 2,2-bis[4-(4-aminophenoxy) phenyl] propane; and 2,2-bis[4-(4-aminophenoxy) phenyl] hexafluoropropane; and the like. Among these, p-phenylenediamine, m-phenylenediamine, 2,4-diamino toluene, and 4,4'-diamino diphenyl ether are preferable from the viewpoint of price, availability, and the like.

### (Manufacturing Method of Polyamic Acid)

The polyamic acid can be obtained by reacting the above described tetracarboxylic dianhydride component with the diamine component in solvent in which both of the components are soluble. Amounts of the tetracarboxylic dianhydride component and the diamine component to be used upon synthesis of the polyamic acid are not particularly limited; however, it is preferable to use 0.50 to 1.50 moles, and more preferable to use 0.60 to 1.30 moles, and particularly preferable to use 0.70 to 1.20 moles of the diamine component with respect to 1 mole of the tetracarboxylic dianhydride component.

Solvents which can be used for synthesis of the polyamic acid include, for example: aprotic polar organic solvents such as N,N,N',N'-tetramethyl urea, N-methyl-2-pyrrolidone, N,N-dimethylformamide, N,N-dimethylacetamide, hexamethylphosphoramide, 1,3-dimethyl-2-imidazolidinone and the γ-butyrolactone; and glycol ethers such as diethyleneglycol dialkyl ether, ethyleneglycol monoalkyl ether acetate, diethyleneglycol monoalkyl ether acetate, propylene glycol monoalkyl ether acetate and propylene glycol monoalkyl ether propionate. These solvents can be used independently, or by combining two or more types. Among these, it is preferable to use N,N,N',N'-tetramethyl urea.

An amount of the solvent to be used upon synthesis of the polyamic acid is not particularly limited as long as the polyamic acid of a desired molecular weight can be synthesized. Typically, the amount of the solvent to be used is preferably 100 to 4000 parts by mass and more preferably 150 to 2000 parts by mass with respect to 100 parts by mass of a combination of the tetracarboxylic dianhydride component and the diamine component.

The temperature at which the reaction between the tetracarboxylic dianhydride component and the diamine component is carried out is not particularly limited as long as the reaction proceeds preferably. Typically, the temperature at which the reaction between the tetracarboxylic dianhydride component and the diamine component is carried out is preferably -5 to 150°C, more preferably 0 to 120°C, and particularly preferably 0 to 70°C. The duration of the reaction between the tetracarboxylic dianhydride component and the diamine component depends on the reaction temperature; however, the duration is preferably 1 to 50 hours, more preferably 2 to 40 hours, and particularly preferably 5 to 30 hours.

### [Solvent Containing N,N,N',N'-tetramethyl urea]

The carbon black dispersion contains a solvent containing N,N,N',N'-tetramethyl urea. By dispersing carbon black in a solvent containing N,N,N',N'-tetramethyl urea by using the above described polyamic acid, dispersion of the carbon black is realized to a desired degree.

A content of N,N,N',N'-tetramethyl urea in the solvent containing N,N,N',N'-tetramethyl urea is not particularly limited as long as the content is within such a range that the dispersed state of the carbon black can be maintained preferably. Typically, the content of N,N,N',N'-tetramethyl urea in the solvent containing N,N,N',N'-tetramethyl urea is preferably at least 50% by mass, more preferably at least 70% by mass, particularly preferably at least 90% by mass, and most preferably 100% by mass.

In a case in which the solvent contains, in addition to N,N,N',N'-tetramethyl urea, a solvent other than N,N,N',N'-tetramethyl urea, preferred examples of the solvent other than N,N,N',N'-tetramethyl urea include: water; polyvalent alcohols such as ethyleneglycol, diethyleneglycol, triethylene glycol, tetraethylene glycol, polyethylene glycol, propylene glycol, dipropylene glycol, tripropylene glycol, 1,3-propylene glycol, isopropylene glycol, polypropylene glycol, pentamethylene glycol, trimethylene glycol, butylene glycol, isobutylene glycol, thiodiglycol, 1,2-hexanediol, 1,6-hexanediol, 2-ethyl-1,3-hexanediol, 1,2-pentanediol, 1,5-pentanediol, 2-methyl-2,4-pentanediol, 1,3-propanediol, 1,4-butanediol, 1,7-heptanediol, 1,8-octanediol, 2-buten-1,4-diol, and glycerin; polyvalent alcohol ethers such as ethyleneglycol monomethyl ether, ethyleneglycol monoethyl ether, ethyleneglycol monobutyl ether, ethyleneglycol mono-t-butyl ether, ethyleneglycol monopropyl ether, ethyleneglycol monoisopropyl ether, ethyleneglycol monophenyl ether, ethyleneglycol monomethyl ether acetate, diethylene glycol monomethyl ether, diethyleneglycol monoethyl ether, diethyleneglycol monoisopropyl ether, diethyleneglycol monobutyl ether, diethyleneglycol mono-t-butyl ether, triethyleneglycol monoethyl ether, triethyleneglycol monobutyl ether, propyleneglycol monomethyl ether, propyleneglycol monoethyl ether, propyleneglycol monobutyl ether, propyleneglycol mono-t-butyl ether, propyleneglycol monopropyl ether, propylene glycol monoisopropylene ether, propyleneglycol monophenyl ether, dipropyleneglycol monomethyl ether, dipropyleneglycol monoethyl ether, dipropyleneglycol monobutyl ether, dipropyleneglycol monopropyl ether and dipropyleneglycol monoisopropylether; ketones such as acetonyl acetone; esters such as γ-butyrolactone, diacetin, and triethyl phosphate; lower alkoxy alcohols such as 2-methoxyethanol and 2-ethoxyethanol; amines such as ethanolamine, diethanolamine, triethanolamine, N-methyldiethanolamine, N-ethyldiethanolamine, triethylenetetraamine, tetraethylenepentamine and pentamethyl diethylene triamine; amides such as formamide, N,N-dimethylformamide, N-methylformamide and N,N-dimethylacetamide; heterocyclic compounds such as 2-pyrrolidone, N-ethyl-2-pyrrolidone, N-methyl-2-pyrrolidone, cyclohexyl pyrrolidone, morpholin, N-ethylmorpholin, 2-oxazolidone, 1,3-dimethyl-2-imidazolidinone, imidazole, methyl imidazole, hydroxy imidazole, dimethylaminopyridine, 1,3-propane sultone, hydroxyethyl piperazine, and piperazine; sulfoxides such as dimethylsulfoxide; and sulfones such as sulfolane. The abovementioned solvent other than N,N,N',N'-tetramethyl urea can be contained in the solvent containing N,N,N',N'-tetramethyl urea, in combination of two or more.

A content of the solvent containing N,N,N',N'-tetramethyl urea in the carbon black dispersion is not particularly limited as long as the content can maintain a preferable dispersed state of the carbon black. The carbon black dispersion generally contains the solvent containing N,N,N',N'-tetramethyl urea in such an amount that a solid content of the carbon black dispersion is 5 to 60% by mass, and preferably 20 to 40% by mass.

### [Other Components]

The carbon black dispersion can contain various additives which are conventionally added to carbon black dispersions. Such additives include viscosity modifier, surface active agent, antioxidant, UV absorber, pH adjustor, antifoaming agent, and the like. These additives are used in the same amounts as amounts conventionally used in carbon black dispersions, in such ranges that characteristics of the carbon black dispersion are not negatively influenced.

The above described carbon black dispersion contains well-dispersed carbon black and provides a colored object having superior thermal resistance, and is therefore preferably used for coloring various compositions, for example a liquid composition such as ink and a black resin composition. The above described carbon black dispersion provides a black composition having superior thermal resistance, and is therefore particularly preferably used for coloring various compositions.

### Dispersion Method of Carbon Black

The carbon black and the polyamic acid are blended into a solvent containing N,N,N',N'-tetramethyl urea such that the carbon black content in a solid content is 50 to 99% by mass, and then the carbon black is dispersed in the solvent.

As a dispersion apparatus used for a carbon black dispersion process, various dispersion apparatuses which are conventionally used for dispersion of pigment can be used. Specific examples of preferred dispersion apparatus include a kneader, a salt milling kneader, a roller mill, a planetary mixer, a paint shaker, a ball mill, a sand mill, an attritor, a pearl mill, a coball mill, a homomixer, a homogenizer, a wet jet mill, a high-pressure homogenizer, a supersonic homogenizer, and the like. In a case in which the dispersion apparatus employs a medium, glass beads, zirconia beads, alumina beads, magnetic beads, styrene beads and the like can be used as the medium.

When the dispersion process is to be done by a supersonic homogenizer, it is preferable to use carbon black which has been dispersed in advance by the abovementioned salt milling kneader, roller mill, planetary mixer, homomixer, homogenizer, wet jet mill, high-pressure homogenizer, bead mill, and the like.

In a case of dispersing carbon black, the carbon black, the polyamic acid, and the solvent containing N,N,N',N'-tetramethyl urea are used in amounts in the abovementioned ranges, respectively.

By dispersing the carbon black by the above described method, preferable dispersion of the carbon black is realized in a short period of time, and the carbon black dispersion which gives a black composition superior in thermal resistance can be prepared.

### Black composition

The black composition contains a base material and the above described carbon black dispersion. In the black composition, the carbon black content in a solid content thereof is 0.1 to 40% by mass.

The base material is a component that provides shapability which allows shaping of the black composition into a film shape or various three-dimensional solid shapes. The base material is not particularly limited as long as the material can provide desired shapability to the black composition. Typically, a resin material composed of a polymeric compound and a reactive low-molecular compound, which gives a polymeric compound as a result of cross-linkage by heat, are used as the base material.

A precursor, which is used for forming a cured object of various thermosetting resins, can be used as the base material contained in the black composition. By heating such a precursor of the cured object of thermosetting resins along with the black composition containing the above described carbon black dispersion, a black cured object is obtained. Specific examples of the black cured object to be formed using the black composition include: epoxy resin, phenolic resin, polyimide resin, urea resin, melamine resin, alkyd resin, polyurethane resin, and the like. As necessary, the precursor used for forming such a cured object is blended to the black composition along with a curing agent, a crosslinking agent, a curing catalyst, and the like.

For example, in a case in which the cured object is an epoxy resin, an epoxy compound as the base material and the curing agent are blended to the black composition. In a case in which the cured object is a phenolic resin, phenols such as phenol and cresol as the base material, and aldehydes such as formaldehyde or hexamethylenetetramine as a crosslinking agent are blended to the black composition. In a case in which the cured object is a polyimide resin, polyamic acid as the base material is blended to the black composition.

From the viewpoint of mechanical properties, solvent resistance, and chemical resistance of the black cured object, it is preferable that the black composition contains the epoxy compound or the polyamic acid as the base material. In addition, from the viewpoint of dispersibility of the carbon black in the cured object, it is more preferable that the black composition contains the polyamic acid as the base material. The same polyamic acid as that blended in the carbon black dispersion can be used as the polyamic acid as the base material.

In a case in which the base material contained in the black composition is a thermosetting material, the black composition is heated to a temperature appropriate for the type of the base material to provide a black cured object. In a case in which the black composition is a composition that contains the polyamic acid as the base material and gives a polyimide resin, the black composition is heated to 120 to 350°C, and preferably 150 to 350°C.

Examples of the base material being a resin material include polyacetal resin, polyamide resin, polycarbonate resin, polyester resin (polybutylene terephthalate, polyethylene terephthalate, polyarylate and the like), FR-AS resin, FR-ABS resin, AS resin, ABS resin, polyphenylene oxide resin, polyphenylene sulfide resin, polysulfone resin, polyethersulfone resin, polyetheretherketone resin, fluorine-based resin, polyimide resin, polyamideimide resin, polyamide bismaleimide resin, polyetherimide resin, polybenzoxazole resin, polybenzothiazole resin, polybenzimidazole resin, silicone resin, BT resin, polymethylpentene, ultra high molecular weight polyethylene, FR- polypropylene, (meta)acrylic resin (polymethylmethacrylate and the like), polystyrene, and the like.

In addition, a resin that produces an aromatic ring formation reaction in a molecule and/or a crosslinking reaction between molecules in response to heating is preferable as the base material. In a case in which the base material is a component that produces such reactions, it is preferable that the black composition contains a thermal imidazole generator (described later) along with the base material. The thermal imidazole generator (described later) promotes cyclization in a molecule and/or crosslinking between molecules in the base material in response to heating.

By the aromatic ring formation reaction in a molecule, a structure of molecular chains constituting the resin becomes rigid, and the black shaped body superior in thermal resistance and mechanical properties can be easily obtained by using the black composition. Preferred aromatic ring formation reactions in a molecule include the reactions represented by the following formulae (I) to (VI). It should be noted that the reactions of the following formulae are merely examples of the aromatic ring formation reaction, and the structure of the resin used as the base material producing the aromatic ring formation reaction in a molecule as a result of heating is not limited to the structure of the precursor polymer shown in the following formulae.

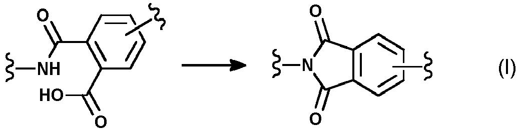

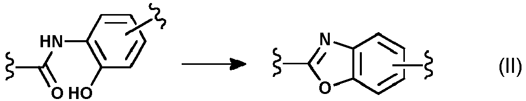

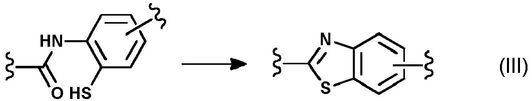

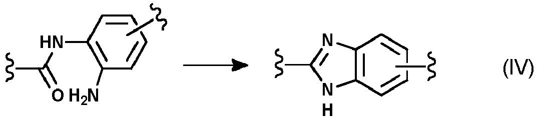

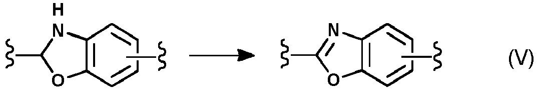

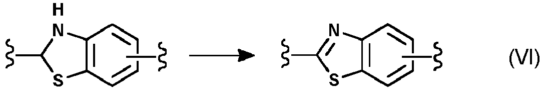

By the crosslinking reaction between molecules, molecular chains constituting the resin are cross-linked to each other and a three-dimensional cross-linked structure is formed. The black shaped body superior in thermal resistance and mechanical properties can thus be obtained by using the black composition containing a resin producing a crosslinking reaction in response to heating as the base material.

Resins having a group selected from a hydroxyl group, a carbonic acid anhydride group, a carboxyl group, and an epoxy group are preferable as a resin producing a crosslinking reaction in response to heating.

Resins producing the aromatic ring formation reaction in a molecule in response to heating include a polybenzoxazole resin precursor, a polybenzothiazole resin precursor, a polybenzimidazole resin precursor, and the like. Examples of the resin producing a crosslinking reaction in response to heating include styrene-maleate copolymer, novolac resin, and the like.

Content of the above described base material in the black composition is preferably 5 to 90% by mass, and more preferably 30 to 70% by mass in a solid content of the black composition.

It is preferable that the black composition contains the thermal imidazole generator (described below) along with the base material. The thermal imidazole generator is not particularly limited as long as it is a compound that forms an imidazole compound by an effect of heat.

A preferable thermal imidazole generator is a compound that forms an imidazole compound represented by the following formula (2): 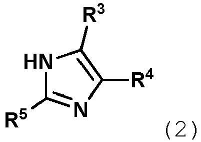 (In the formula (2), R³, R⁴, R⁵ represent respectively independently a hydrogen atom, a halogen atom, a hydroxyl group, a mercapto group, a sulfide group, a silyl group, a silanol group, a nitro group, a nitroso group, a sulfonato group, a phosphino group, a phosphinyl group, a phosphonato group or an organic group.)

In a case in which the black composition contains the thermal imidazole generator, a black shaped body superior in thermal resistance can be obtained by shaping the black composition into a desired shape and then heating the shaped black composition up to a temperature higher than a temperature at which the thermal imidazole generator forms an imidazole compound.

The black composition contains the carbon black which is dispersed by using the polyamic acid as the dispersant. The imidazole compound represented by the formula (2) formed by heating the black composition promotes conversion of the polyamic acid, which has been adsorbed to the surface of the carbon black primary particle, into highly thermally resistant polyimide. The black shaped body superior in thermal resistance can thus be obtained by a predetermined method including heating, using the black composition according to the present invention.

In addition, in a case in which a material used as the base material has a structure producing the aromatic ring formation reaction in a molecule or the crosslinking reaction between molecules, the imidazole compound represented by the formula (2) formed by heating the black composition improves thermal resistance of the matrix composed of the base material by promoting the aromatic ring formation reaction or the crosslinking reaction.

As the organic group in R³, R⁴, and R⁵, an alkyl group, an alkenyl group, a cycloalkyl group, a cycloalkenyl group, an aryl group, an aralkyl group, and the like can be exemplified. The organic group can include a bond other than a hydrocarbon group such as a hetero atom, or a substituent. In addition, the organic group can be either a straight chain, a branched chain, or cyclic. The organic group is generally monovalent; however, can also be an organic group of divalent or more in a case of forming a cyclic structure or the like.

R³ and R⁴ can bind to form a cyclic structure, and can further include a hetero atom bond. As the cyclic structure, a heterocycloalkyl group, a heteroaryl group and the like can be exemplified, and the cyclic structure can also be a condensed ring.

A bond included in the organic group of R³, R⁴, and R⁵ is not particularly limited as long as the effect of the present invention is not impaired, and the organic group can include a bond including a hetero atom such as an oxygen atom, a nitrogen atom, a silicon atom and the like. Specific examples of the bond including a hetero atom include an ether bond, a thioether bond, a carbonyl bond, a thiocarbonyl bond, an ester bond, an amide bond, a urethane bond, an imino bond (-N=C(-R)-, -C(=NR)-: R representing a hydrogen atom or an organic group), a carbonate bond, a sulfonyl bond, a sulfinyl bond, an azo bond and the like.

As the bond including a hetero atom which can be included in the organic group of R³, R⁴, and R⁵, an ether bond, a thioether bond, a carbonyl bond, a thiocarbonyl bond, an ester bond, an amide bond, a urethane bond, an imino bond (-N=C(-R)-, -C(=NR)-: R representing a hydrogen atom or a monovalent organic group), a carbonate bond, a sulfonyl bond, and a sulfinyl bond are preferable from the viewpoint of thermal resistance of the imidazole compound.

In a case in which the organic group of R³, R⁴, and R⁵ is a substituent other than a hydrocarbon group, R³, R⁴, and R⁵ are not particularly limited as long as the effect of the present invention is not impaired. Specific examples of R³, R⁴, and R⁵ include a halogen atom, a hydroxyl group, a mercapto group, a sulfide group, a cyano group, an isocyano group, a cyanato group, an isocyanato group, a thiocyanato group, an isothiocyanato group, a silyl group, a silanol group, an alkoxy group, an alkoxycarbonyl group, a carbamoyl group, a thiocarbamoyl group, a nitro group, a nitroso group, a carboxylate group, an acyl group, an acyloxy group, a sulfino group, a sulfonato group, a phosphino group, a phosphinyl group, a phosphonato group, an alkyl ether group, an alkenylether group, an alkylthioether group, an alkenylthioether group, an arylether group, an arylthioether group and the like. The hydrogen atom included in the substituent can be substituted by a hydrocarbon group. In addition, the hydrocarbon group included in the abovementioned substituent can be either a straight chain, a branched chain, or cyclic.

As R³, R⁴, and R⁵, a hydrogen atom, an alkyl group having 1 to 12 carbon atoms, an aryl group having 1 to 12 carbon atoms, an alkoxy group having 1 to 12 carbon atoms, and a halogen atom are preferable, and a hydrogen atom is more preferable.

The thermal imidazole generator is not particularly limited as long as it is a compound that can form an imidazole compound represented by the above formula (2) by heating. A compound used as the component (2) can be obtained by, in a compound that is conventionally added to various compositions and generates amine by an effect of heat (thermal base generator), substituting a skeleton derived from amine generated upon heating by a skeleton derived from an imidazole compound represented by the above formula (2).

As a preferable thermal imidazole generator, a compound represented by the following formula (3): 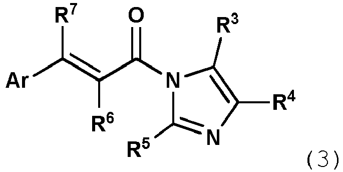 (In the formula (3), R³, R⁴, R⁵ represent respectively independently a hydrogen atom, a halogen atom, a hydroxyl group, a mercapto group, a sulfide group, a silyl group, a silanol group, a nitro group, a nitroso group, a sulfonato group, a phosphino group, a phosphinyl group, a phosphonato group or an organic group; R⁶ and R⁷ represent respectively independently a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group or an organic group; and Ar is an aromatic group which can have a substituent.)
can be exemplified.

In the formula (3), R³, R⁴, and R⁵ are the same as those explained regarding the formula (2).

In the formula (3), R⁶ and R⁷ represent respectively independently a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group or an organic group.

As the organic group in R⁶ and R⁷, those listed for R³, R⁴, and R⁵ can be exemplified. The organic group can include a hetero atom, as in the case of R³, R⁴, and R⁵. In addition, the organic group can be either a straight chain, a branched chain, or cyclic.

Among the above, R⁶ and R⁷ are preferably, respectively independently a hydrogen atom, an alkyl group having 1 to 10 carbon atoms, a cycloalkyl group having 4 to 13 carbon atoms, a cycloalkenyl group having 4 to 13 carbon atoms, an aryloxy alkyl group having 7 to 16 carbon atoms, an aralkyl group having 7 to 20 carbon atoms, an alkyl group having 2 to 11 carbon atoms substitute with a cyano group, an alkyl group having 1 to 10 carbon atoms substituted with a hydroxyl group, an alkoxy group having 1 to 10 carbon atoms, an amido group having 2 to 11 carbon atoms, an alkylthio group having 1 to 10 carbon atoms, an acyl group having 1 to 10 carbon atoms, an ester group (-COOR, -OCOR: R indicating a hydrocarbon group) having 2 to 11 carbon atoms, an aryl group having 6 to 20 carbon atoms, an aryl group having 6 to 20 carbon atoms in which an electron donating group and/or an electron withdrawing group are substituted, a benzylic group in which an electron-donating group and/or an electron withdrawing group are substituted, a cyano group, and a methylthio group. More preferably, R⁶ and R⁷ are both hydrogen atoms; or R⁶ is a methyl group and R⁷ is a hydrogen atom.

In the formula (3), Ar is an aromatic group which can have a substituent. The aromatic group can be either an aromatic hydrocarbon group or an aromatic heterocyclic group. Examples of the aromatic group include a phenyl group, a naphthyl group, a biphenylyl group, an anthryl group, a phenanthrenyl group, a pyridyl group, a furyl group, a thienyl group, an imidazolyl group, a pyrazolyl group, an oxazolyl group, a thiazolyl group, an isooxazolyl group, an isothiazolyl group, a benzoxazolyl group, a benzothiazolyl group, and a benzimidazolyl group. Among these aromatic groups, a phenyl group and a thienyl group are preferable.

Among compounds represented by the formula (3), compounds represented by the following formula (4): 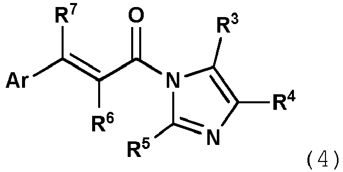 (In the formula (4), R³, R⁴, R⁵ represent respectively independently a hydrogen atom, a halogen atom, a hydroxyl group, a mercapto group, a sulfide group, a silyl group, a silanol group, a nitro group, a nitroso group, a sulfonato group, a phosphino group, a phosphinyl group, a phosphonato group or an organic group; R⁶ and R⁷ represent respectively independently a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group or an organic group; R⁸, R⁹, R¹⁰, R¹¹, and R¹² represent respectively independently a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, an amino group, an ammonio group, or an organic group; and at least two of R⁸, R⁹, R¹⁰, R¹¹, and R¹² can bind to form a cyclic structure, and these can further include a bond of hetero atoms.)
are preferred.

In the formula (4), R³, R⁴, and R⁵ are the same as those explained regarding the formula (2), and R⁶ and R⁷ are the same as those explained regarding the formula (3).

In the formula (4), R⁸, R⁹, R¹⁰, R¹¹ and R¹² represent respectively independently a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, an amino group, an ammonio group, or an organic group.

As the organic group in R⁸, R⁹, R¹⁰, R¹¹ and R¹², those listed for R³, R⁴, and R⁵ can be exemplified. As in the case of R³ and R⁴, the organic group can include a bond other than a hydrocarbon group such as a hetero atom, or a substituent. In addition, the organic group can be either a straight chain, a branched chain, or cyclic.

At least two of R⁸, R⁹, R¹⁰, R¹¹, and R¹² can bind to form a cyclic structure, and these can further include a bond of hetero atoms. As the cyclic structure, a heterocycloalkyl group, a heteroaryl group and the like can be exemplified, and the cyclic structure can also be a condensed ring. For example, R⁸, R⁹, R¹⁰, R¹¹ and R¹² can form a condensed ring such as naphthalene, anthracene, phenanthrene, indene and the like, through bonding of at least two of these and sharing of an atom of a benzene ring to which R⁸, R⁹, R¹⁰, R¹¹ and R¹² are bound.

Among the above, R⁸, R⁹, R¹⁰, R¹¹ and R¹² are preferably, respectively independently a hydrogen atom, an alkyl group having 1 to 10 carbon atoms, a cycloalkyl group having 4 to 13 carbon atoms, a cycloalkenyl group having 4 to 13 carbon atoms, an aryloxy alkyl group having 7 to 16 carbon atoms, an aralkyl group having 7 to 20 carbon atoms, an alkyl group having 2 to 11 carbon atoms substituted with a cyano group, an alkyl group having 1 to 10 carbon atoms substituted with a hydroxyl group, an alkoxy group having 1 to 10carbon atoms, an amido group having 2 to 11 carbon atoms, an alkylthio group having 1 to 10 carbon atoms, an acyl group having 1 to 10 carbon atoms, an ester group having 2 to 11 carbon atoms, an aryl group having 6 to 20 carbon atoms, an aryl group having 6 to 20 carbon atoms in which an electron donating group and/or an electron withdrawing group are substituted, a benzylic group in which an electron-donating group and/or an electron withdrawing group are substituted, a cyano group, a methylthio group, and a nitro group.

In addition, R⁸, R⁹, R¹⁰, R¹¹ and R¹² which form a condensed ring such as naphthalene, anthracene, phenanthrene, indene and the like, through bonding of at least two of these and sharing of an atom of a benzene ring to which R⁸, R⁹, R¹⁰, R¹¹ and R¹² are bound are also preferred.

Among the compound represented by the above formula (4), a compound represented by the following formula (5): 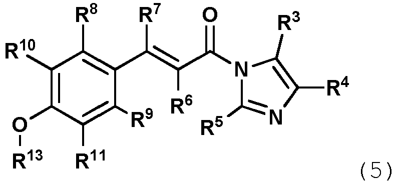 (In the formula (5), R³, R⁴, and R⁵ are the same as those explained regarding the formula (2); R⁶ to R¹¹ are the same as the formula (4); R¹³ represents a hydrogen atom or an organic group; R⁶ and R⁹ are not hydroxyl groups; and at least two of R⁸, R⁹, R¹⁰, and R¹¹ can bind to form a cyclic structure, and these can further include a bond of hetero atoms.) is preferable.

The compound represented by the formula (5) has a substituent -O-R¹³ and is superior in solubility in organic solvent.

In the formula (5), R¹³ is a hydrogen atom or an organic group. In a case in which R¹³ is an organic group, those listed for R³, R⁴, and R⁵ can be exemplified as the organic group. The organic group can include a hetero atom. In addition, the organic group can be either a straight chain, a branched chain, or cyclic. As R¹³, a hydrogen atom or an alkyl group having 1 to 12 carbon atoms is preferable; and a methyl group is more preferable.

Specific examples of a compound particularly preferred as the thermal imidazole generator are shown below.

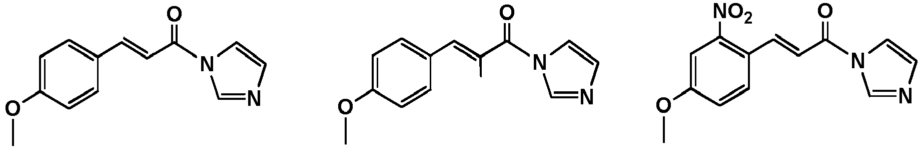

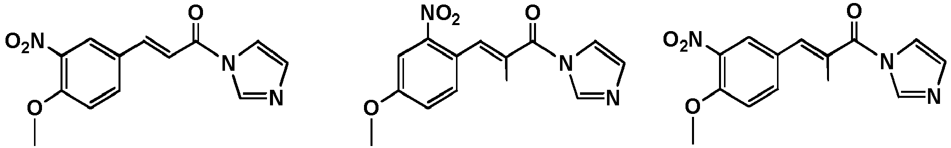

A temperature at which the thermal imidazole generator generates an imidazole compound can be measured by TG-DTA (thermogravimetric and differential thermal analysis). More specifically, the temperature at which the thermal imidazole generator generates an imidazole compound is a temperature of an inflection point closest to a lowermost temperature on a baseline, showing the beginning of weight loss due to thermal decomposition, on a TG curve obtained by TG-DTA of the thermal imidazole generator.

In a case in which the black composition contains the thermal imidazole generator, a black shaped body superior in thermal resistance can be manufactured by heating the black composition up to a temperature higher than a temperature at which the thermal imidazole generator generates an imidazole compound.

Content of the thermal imidazole generator in the black composition is preferably 0.01 to 30% by mass, and more preferably 0.1 to 5% by mass in a solid content of the black composition.

It is preferable that the black composition further contains an organic solvent for dilution. Examples of the organic solvent include: (poly) alkylene glycol monoalkyl ethers such as ethyleneglycol monomethyl ether, ethyleneglycol monoethyl ether, ethyleneglycol-n-propylether, ethyleneglycol mono-n-butyl ether, diethyleneglycol monomethyl ether, diethyleneglycol monoethyl ether, diethyleneglycol mono-n-propyl ether, diethyleneglycol mono-n-butyl ether, triethyleneglycol monomethyl ether, triethyleneglycol monoethyl ether, propyleneglycol monomethyl ether, propyleneglycol monoethyl ether, propyleneglycol mono-n-propyl ether, propyleneglycol mono-n-butyl ether, dipropyleneglycol monomethyl ether, dipropyleneglycol monoethyl ether, dipropyleneglycol mono-n-propyl ether, dipropyleneglycol mono-n-butyl ether, tripropyleneglycol monomethyl ether, and tripropyleneglycol monoethyl ether; (poly) alkylene glycols monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol methyl ether acetate, and propylene glycol monoethyl ether acetate; other ethers such as diethyleneglycol dimethylether, diethyleneglycol methylethyl ether, diethyleneglycol diethylether, and tetrahydrofuran; ketones such as methyl ethyl ketone, cyclohexanone, 2-heptanone, and 3-heptanone; alkyl lactate esters such as methyl 2-hydroxypropionate and ethyl 2-hydroxypropionate; other esters such as ethyl 2-hydroxy-2-methylpropionate, methyl 3-methoxypropionate, ethyl 3-methoxypropionate, methyl 3-ethoxypropionate, ethyl 3-ethoxypropionate, ethoxy-ethylacetate, hydroxy ethylacetate, methyl 2-hydroxy-3-methylbutanoate, 3-methyl-3-methoxybutyl acetate, 3-methyl-3-methoxybutyl propionate, ethylacetate, n-propyl acetate, isopropyl acetate, n-butyl acetate, isobutyl acetate, n-pentyl formate, isopentyl acetate, n-butyl propionate, ethyl butyrate, n- propyl butyrate, isopropyl butyrate, n-butyl butyrate, methyl pyruvate, ethyl pyruvate, n-propyl pyruvate, methyl acetoacetate, ethyl acetoacetate, and ethyl 2-oxo butanoate; aromatic hydrocarbons such as toluene and xylene; amides such as formamide, N,N-dimethylformamide, N-methylformamide and N,N-dimethylacetamide; ureas such as N,N,N',N'-tetramethyl urea and N,N,N',N'-tetraethyl urea; heterocyclic compounds such as 2-pyrrolidone, N-ethyl-2-pyrrolidone, N-methyl-2-pyrrolidone, cyclohexyl pyrrolidone, morpholin, N-ethylmorpholin, 2-oxazolidone, 1,3-dimethyl-2-imidazolidinone, dimethylaminopyridine, 1,3-propane sultone, hydroxyethyl piperazin, and piperazin; sulfoxides such as dimethylsulfoxide; and sulfones such as sulfolane.

Among these, amides such as formamide, N,N-dimethylformamide, N-methylformamide and N,N-dimethylacetamide; ureas such as N,N,N',N'-tetramethyl urea and N,N,N',N'-tetraethyl urea; and heterocyclic compounds such as 2-pyrrolidone, N-ethyl-2-pyrrolidone, N-methyl-2-pyrrolidone, cyclohexyl pyrrolidone are preferable. These organic solvents can be used independently, or in combination of two or more.

Content of the organic solvent is preferably such that the solid content of the black composition is 1 to 50% by mass, and more preferably such that the solid content of the black composition is 5 to 30% by mass.

The black composition can contain various additives as necessary. The additives include a sensitizer, a curing accelerator, a filler, an adhesion promoter, an antioxidant, an aggregation inhibitor, a thermal polymerization inhibitor, an antifoaming agent, a surface active agent, and the like.

As the adhesion promoter, a silane coupling agent is preferred. By adding a silane coupling agent, independently from the silane coupling agent represented by the formula (I) used for process of the carbon black, to the black composition, a black shaped body superior in adhesion to a base material can be obtained.

The silane coupling agent used as the adhesion promoter may either be the silane coupling agent represented by the formula (I) or a silane coupling agent other than that represented by the formula (I).

Preferred examples of the silane coupling agent other than that represented by the formula (I) include N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, and 3-triethoxysilyl-N-(1,3-dimethyl-butylidene) propylamine.

Since the above described black composition contains the above described carbon black dispersion, the black shaped body made with the black composition is not easily discolored even at a high temperature such as 120 to 350°C. In addition, since the carbon black is well dispersed in the above described carbon black dispersion, the black shaped body made with the above described black composition is colored in black of a desired density.

### EXAMPLES

### [Preparation Example 1: Preparation of Carbon Black with Acidic Group Introduced]

550 g of carbon black (Regal250R, manufactured by Cabot), 31.5 g of sulfanilic acid, and 1,000 g of ion exchanged water were added to a reaction vessel equipped with a jacket and a stirrer, set to jacket temperature of 60°C. After adding a solution in which 12.6 g of sodium nitrite is dissolved in 100 g of deionized water to a BRAU MIXER, a mixture in the mixer was stirred under conditions of 60°C and 50 rpm for two hours, to thereby perform a diazo coupling reaction. After stirring, a content of the mixer was cooled to room temperature. Then, the carbon black included in the content of the mixer was purified by the diafiltration method using deionized water. Benzene sulfonic acids derived from sulfanilic acid were not detected in wash water, and it was found that a benzene sulfonic group was introduced into the carbon black by the diazo coupling reaction. The carbon black thus purified was dried at 75°C overnight, and then crushed to obtain carbon black (CB-B) with a benzene sulfonic group introduced thereinto.

### [Example 1, Example 2, and Comparative Examples 1 to 4]

In Examples and Comparative Examples, CB-A (Regal250R, manufactured by Cabot) and CB-B provided by above described Preparation Example 1 which is the carbon black with an acidic group introduced thereinto were used as the carbon black with no dispersion process.

In Example 1, Example 2, Comparative Example 1, Comparative Example 2 and Comparative Example 4, upon dispersion of carbon black, PAA1 (1/1 (mole ratio) reactant of pyromellitic dianhydride (PMDA) and 4,4'-diaminodiphenyl ether (ODA), mass average molecular weight: 14000) was used as the polyamic acid.

In Comparative Examples 2 and 4, DISPERBYK-167 (manufactured by BYK Japan) was used as a dispersion aid.

In Examples, N,N,N',N'-tetramethyl urea (TMU) was used as a solvent. In Comparative Examples, N-methyl-2-pyrrolidone (NMP) was used as a solvent.

First, 15 g of carbon black shown in Table 1 and 7.5 g of polyamic acid shown in Table 1, and 50 g of solvent shown in Table 1 were blended. It should be noted that no polyamic acid was used in Comparative Example 3. In Comparative Examples 2 and 4, 7.5 g of dispersion aid was further added. Then, a mixture thus obtained was stirred to disperse the carbon black. A high concentration carbon black dispersion thus obtained was diluted with the solvent shown in Table 1 to a solid content concentration of 30% by mass, to obtain carbon black dispersions of Examples and Comparative Examples.

By using the carbon black dispersions thus obtained, dispersibility of the carbon black was evaluated according to the following method. The evaluation results of dispersibility are shown in Table 1.

### Evaluation of Dispersibility

An average particle size of the carbon black in the carbon black dispersions thus obtained was measured using a dynamic light-scattering particle size distribution measuring equipment LB -500 manufactured by HORIBA. An average particle size thus measured was considered to be a dispersed particle size. A smaller dispersed particle size indicates better dispersion without aggregation of carbon black. Regarding dispersibility, a case with the dispersed particle size of no greater than 90 nm was considered to be good dispersion (Good), and a case with the dispersed particle size of greater than 90 nm was considered to be poor dispersion (Poor).

### [Examples 3 to 5 and Comparative Examples 5 to 7]

10 g of carbon black dispersion obtained in Examples or Comparative Example shown in Dispersion Type column in Table 2, 9 g of polyamic acid shown in Table 2, and 100 g of solvent shown in Table 2 were blended uniformly to obtain a black thermosetting composition.

It should be noted that a black composition containing the carbon black dispersion obtained in Comparative Example 3 was not prepared, since the dispersed state of the carbon black was extremely poor in the carbon black dispersion obtained in Comparative Example 3.

Cured objects of the black compositions thus obtained were evaluated for light blocking properties, thermal resistance, and surface resistance, according to the following method. The evaluation results are shown in Table 2.

### Evaluation of Light Blocking Properties

The black composition was applied on a wafer substrate by using a spin coater (manufactured by Mikasa, 1H-360S). The coating on the wafer substrate was heated at 180°C for 20 minutes and a cured film of approximately 1.0 µm in thickness was formed. An OD value of the cured film thus formed was measured by using a transmittance measuring device (D-200II, manufactured by GretagMacbeth). A case with the OD value of at least 1.0 was evaluated as Good and a case with the OD value of less than 1.0 was evaluated as Poor.

### Evaluation of Thermal Resistance

The black composition was applied on a wafer substrate by using a spin coater (manufactured by Mikasa, 1H-360S). The coating on the wafer substrate was heated at 300°C or 170°C for 1 hour and a cured film of approximately 1.0 µm in thickness was formed. A sample of 5 µg for thermal resistance evaluation was scraped off from respective cured films formed by heating to 300°C or 170°C. Using the samples for thermal resistance evaluation, by a differential heat/thermogravimetry apparatus (TG/DTA-6200, manufactured by SEIKO INSTRUMENTS), measurement was performed under conditions of 10°C/min of temperature increase rate in an air current, to obtain a TG curve. From the TG curve thus obtained, 5% weight loss temperature of the sample was obtained. A case with the 5% weight loss temperature of higher than 400°C was evaluated as Excellent, a case of higher than 300°C and no higher than 400°C was evaluated as Good, and a case of lower than 300°C was evaluated as Poor.

### Evaluation of Surface Resistance

A cured film was formed as in the above described evaluation of light blocking properties, and a resistance value of the surface of the cured film was measured by VR-70 (Manufactured by Kokusai Electric). A case with the surface resistance value of at least 1x10¹³ Ω was evaluated as Excellent, a case with the surface resistance value of at least 1x10¹⁰ Ω and no greater than 1x10¹³ Ω was evaluated as Good, and a case with the surface resistance value of no greater than 1x10¹⁰ Ω was evaluated as Poor.

**[Table 1]**

| | Carbon Black | Polyamic Acid | Solvent | Dispersion Aid | Evaluation of Dispersibility |
|---|---|---|---|---|---|
| Example 1 | CB-B | PAA1 | TMU | Not added | Good |
| Example 2 | CB-A | PAA1 | TMU | Not added | Good |
| Comparative Example 1 | CB-B | PAA1 | NMP | Not added | Poor |
| Comparative Example 2 | CB-B | PAA1 | NMP | Added | Good |
| Comparative Example 3 | CB-A | - | NMP | Not added | Poor |
| Comparative Example 4 | CB-A | PAA1 | NMP | Added | Good |

**[Table 2]**

| | Materials Contained in the Black Composition | | | Evaluation Results | | | |
|---|---|---|---|---|---|---|---|
| | Dispersion Type | Polyamic Acid | Solvent | Light Blocking Properties | Thermal Resistance | | Surface Resistance |
| | | | | | 300°C -1h | 170°C -1h | |
| Example 3 | Example 1 | PAA1 | TMU | Good | Excellent | Excellent | Excellent |
| Example 4 | Example 2 | PAA1 | TMU | Good | Excellent | Excellent | Good |
| Example 5 | Example 2 | PAA1 | NMP | Good | Excellent | Good | Good |
| Comparative Example 5 | Comparative Example 1 | PAA1 | TMU | Good | Excellent | Good | Good |
| Comparative Example 6 | Comparative Example 2 | PAA1 | TMU | Good | Poor | Poor | Good |
| Comparative Example 7 | Comparative Example 4 | PAA1 | NMP | Good | Poor | Poor | Poor |

According to Examples 1 and 2, it is found that the carbon black dispersion with well dispersed carbon black can be prepared easily in a short period of time, by dispersing the carbon black by using the polyamic acid in the solvent containing N,N,N',N'-tetramethyl urea. According to Examples 3 to 5, it is found that the cured object formed by using the black composition containing the carbon black dispersion containing the solvent containing the carbon black, the polyamic acid, and N,N,N',N'-tetramethyl urea is superior in light blocking properties and thermal resistance and high in surface resistance.

By comparing Example 3 with Examples 4 and 5, it is found that, in a case of using the carbon black having been processed to introduce an acidic group, a cured object which is remarkably high in surface resistance can be formed by using the black composition containing the carbon black dispersion containing such carbon black.

According to Comparative Example 1, it is found that, in a case of dispersing the carbon black in a solvent without N,N,N',N'-tetramethyl urea, the carbon black is not dispersed well even by using the polyamic acid.

According to Comparative Examples 2 and 4, it is found that, in a case of dispersing the carbon black by using the polyamic acid and the dispersion aid in the solvent without N,N,N',N'-tetramethyl urea, the carbon black is dispersed well. According to Comparative Examples 6 and 7, the cured objects formed by using the black compositions containing the carbon black dispersions of Comparative Examples 2 and 4 are poor in thermal resistance.

According to Comparative Example 3, it is found that the carbon black is not dispersed well only by blending the carbon black with the solvent without N,N,N',N'-tetramethyl urea.

### [Examples 6 to 20 and Comparative Example 8]

In Examples 6 to 20 and Comparative Example 8, BR-1 to BR-8 presented below were used as the base material.
BR-1: Polyamic acid prepared in Preparation Example 2 below
BR-2: Polyamic acid prepared in Preparation Example 3 below
BR-3: Polybenzoxazole precursor prepared in Preparation Example 4 below
BR-4: Polyimide resin prepared in Preparation Example 5 below
BR-5: Styrene-maleic anhydride copolymer (SMA1000, manufactured by Kawahara Petrochemical)
BR-6: N,N,N',N'-tetraglycidyl-4,4'-diaminodiphenylmethane
BR-7: Polybenzimidazole resin prepared in Preparation Example 6 below
BR-8: cresol novolac resin (m-cresol/p-cresol ratio = 6/4, mass average molecular weight: 80000)

### [Preparation Example 2]

### (Preparation of BR-1)

654.4 g of pyromellitic dianhydride, 672.8 g of 4,4'-diaminodiphenylether, and 2518 g of NMP were put into a separable flask of 5 L in capacity equipped with a nitrogen introduction tube, a stirrer, and a cooling device. Nitrogen was introduced into the flask through the nitrogen gas introduction tube and a nitrogen atmosphere was provided in the flask. Then, tetracarboxylic dianhydride and diamine were reacted at 50°C for 20 hours while stirring the content of the flask, and the solvent was removed to obtain BR -1, which is polyamic acid.

### [Preparation Example 3]

PAA2, which is polyamic acid, was obtained by a similar process to that of BR-1 except for using 228.2 g of cis-4-cyclohexene-1,2-dicarboxylic anhydride and 441.3 g of 3,3,4,4-biphenyltetracarboxylic dianhydride instead of pyromellitic acid, and using 1170.8 g of 9,9-bis (4-aminophenyl) fluorene instead of 4,4'-diaminodiphenylether.

### [Preparation Example 4]

### (Preparation of BR-3)

2 mmol of 4,4'-diamino-3,3'-dihydroxybiphenyl and 1 mL of NMP were put into an Erlenmeyer flask with a rotor thereinside, and then a content of the flask was stirred using a magnetic stirrer for five minutes. Thereafter, 2 mmol of isophthalaldehyde was put into the flask and the content of the flask was refluxed in a nitrogen atmosphere for three hours for allowing a reaction to proceed. Then, reaction liquid was dehydrated by distillation under reduced pressure, and the solvent was removed to obtain BR-3, which is a polybenzoxazole precursor having the following structure. The number average molecular weight of the polybenzoxazole precursor was approximately 1500. 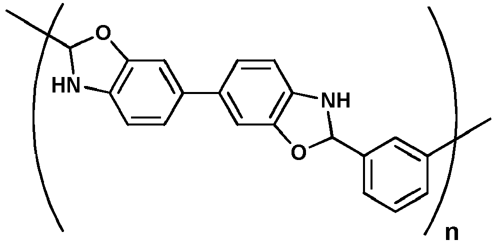 (In the above formula, n is the number of repetitions of the unit between parentheses)

### [Preparation Example 5]

### (Preparation of BR-4)

A glass reaction container equipped with a nitrogen introduction tube, a stirrer, and a cooling device was charged with 14.71 g (50 mmol) of 3,3',4,4'-biphenyltetracarboxylic dianhydride, 10.01 g (50 mmol) of 4,4'-diaminodiphenylether, and 181.30 g of N-methyl-2-pyrrolidone. A content of the reaction container was heated from room temperature to 160°C for 1 hour to allow polymerization and imidization to proceed, thereby obtaining a prepolymerization liquid. Polyimide contained in the prepolymerization liquid had an imidization of at least 90% and logarithmic viscosity of 1.02. Rotational viscosity of the prepolymerization liquid was 1.1 Pa.s at 140°C.

An autoclave with a container of which inner wall is glass-coated was charged with 11 g (approximately 8 ml) of the prepolymerization liquid thus obtained, and a vapor phase in the autoclave was substituted with nitrogen. Then, the autoclave was sealed, the prepolymerization liquid was heated to 180°C, and then the solvent was removed to obtain BR-4, which is a polyimide resin.

### [Preparation Example 6]

### (Preparation of BR-7)

56.35 g (263 mmol) of 3,3',4,4'-tetraamino biphenyl and 43.69 g (0.263 mmol) of isophthalic acid and triphenyl phosphite were added to a glass reaction container equipped with a nitrogen introduction tube, a stirrer, and a cooling device. Inside temperature of the flask was raised to 415°C for 1 hour while stirring a content of the flask in a nitrogen atmosphere. After the inside temperature of the flask reached 415°C, the reaction was continued for a further 1 hour at the same temperature. After completion of the reaction, the content of the flask was cooled to room temperature to obtain BR-7, which is a polybenzimidazole resin. The mass average molecular weight of the polybenzimidazole resin thus obtained was 140000.

In Examples 6 to 20 and Comparative Example 8, the above described carbon black CB-A and CB-B were used for preparation of the carbon black dispersions.

In Examples 8 and 11, the carbon black having been processed by the silane coupling agent according to the following method was used. SC-A (described below) was used as the silane coupling agent. SC-A was used as the adhesion promoter in Example 12.

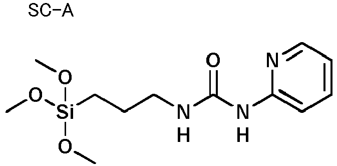

### [Silane Coupling Agent Process]

50 g of carbon black shown in Table 3 and 200 g of isopropyl alcohol solution of the silane coupling agent of 1.25% by mass in concentration were blended and stirred at 60°C for 3 hours. A suspension containing the carbon black thus stirred was heated to 100°C, and isopropyl alcohol and by produced methanol were volatilized to obtain carbon black powder having been processed by the silane coupling agent.

By using the carbon black described above, the carbon black dispersion was prepared according to the following method.

Upon preparation of the carbon black dispersion, the following DP-1 to DP-3 were used as dispersants.
DP-1: Polyamic acid obtained in the above Preparation Example 2 (BR-1)
DP-2: Polyamic acid obtained in the above Preparation Example 3 (BR-2)
DP-3: Urethane-based polymeric dispersant (BYK-167, manufactured by BYK Japan)

Upon preparation of the carbon black dispersion, N,N,N',N'-tetramethyl urea (TMU) was used as a solvent.

### [Preparation Method of Carbon Black Dispersion]

To 10 g of untreated carbon black or 10.5 g of carbon black having been processed by the silane coupling agent and 3 g of the dispersant shown in Table 3, the solvent shown in Table 3 was added such that a total amount of the carbon black dispersion was 100 g. A mixture thus obtained was stirred to disperse the carbon black and obtain the carbon black dispersion.

In Examples 6 to 20 and Comparative Example 8, the following compound was used as the thermal imidazole generator. The temperature at which the following compound generates imidazole is lower than 180°C.

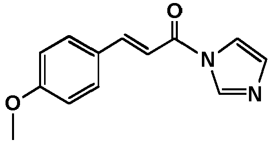

In Example 6 to 20 and Comparative Example 8, N,N,N',N'-tetramethyl urea (TMU), N-methyl-2-pyrrolidone (NMP) or N,N-dimethylacetamide (DMAc) was used as the organic solvent to dilute the black composition.

For Examples 6 to 20 and Comparative Example 8, the base material of the type and amount shown in Table 3, 27.5 g of the carbon black dispersion of the configuration shown in Table 3, 0.3 g of the thermal imidazole generator, and 66.3 g of the organic solvent shown in Table 3 were blended uniformly to obtain a black composition.

In Example 12, 0.1 g of the above described SC-A was added to the black composition as an adhesion promoter.

Thermal resistance and the optical density of the black shaped body (film) formed by using the black composition thus obtained were evaluated according to the following method.

### Evaluation of Thermal Resistance

The black composition was applied on a wafer substrate by using a spin coater. The coating on the wafer substrate was heated at 180°C for 1 hour and a cured film (black shaped body) of approximately 1.0 µm in thickness was formed.

A sample of 5 µg for thermal resistance evaluation was scraped off from the cured film thus formed. Using the samples for thermal resistance evaluation, by a differential heat/thermogravimetry apparatus (TG/DTA-6200, manufactured by SEIKO INSTRUMENTS), measurement was performed under conditions of 10°C/min of temperature increase rate in an air current, to obtain a TG curve. From the TG curve thus obtained, 5% weight loss temperature of the sample was obtained. Measurement results of 5% weight loss temperature are shown in Table 4. Evaluation of Optical Density

A cured film (black shaped body) of approximately 1.0 µm in thickness was formed as in the case of thermal resistance evaluation.

An OD value of the cured film thus formed was measured by using a transmittance measuring device (D-200II, manufactured by GretagMacbeth). The OD value thus measured is shown in Table 4.

**[Table 3]**

| | Base Material | | Carbon Black Dispersion | | | Thermal Imidazole Generator | Organic Solvent |
|---|---|---|---|---|---|---|---|
| | Type | Content (g) | Type of Carbon Black | Type of Dispersant | Type of Solvent | Content (g) | Type |
| Example 6 | BR-1 | 5.9 | CB-B | DP-1 | TMU | 0.3 | NMP |
| Example 7 | BR-1 | 5.9 | CB-A | DP-1 | TMU | 0.3 | NMP |
| Example 8 | BR-1 | 5.9 | CB-B | DP-1 | TMU | 0.3 | NMP |
| Example 9 | BR-1 | 5.9 | CB-B | DP-2 | TMU | 0.3 | NMP |
| Example 10 | BR-1 | 5.9 | CB-B | DP-2 | TMU | 0.3 | TMU |
| Example 11 | BR-1 | 5.9 | CB-B | DP-2 | TMU | 0.3 | TMU |
| Example 12 | BR-1 | 5.8 | CB-B | DP-1 | TMU | 0.3 | NMP |
| Example 13 | BR-1 | 5.9 | CB-B | DP-1 | TMU | 0.3 | DMAc |
| Example 14 | BR-2 | 5.9 | CB-B | DP-1 | TMU | 0.3 | NMP |
| Example 15 | BR-3 | 5.9 | CB-B | DP-1 | TMU | 0.3 | NMP |
| Example 16 | BR-4 | 5.9 | CB-B | DP-1 | TMU | 0.3 | NMP |
| Example 17 | BR-5 | 5.9 | CB-B | DP-1 | TMU | 0.3 | NMP |
| Example 18 | BR-6 | 5.9 | CB-B | DP-1 | TMU | 0.3 | NMP |
| Example 19 | BR-7 | 5.9 | CB-B | DP-1 | TMU | 0.3 | NMP |
| Example 20 | BR-8 | 5.9 | CB-B | DP-1 | TMU | 0.3 | NMP |
| Comparative Example 8 | BR-1 | 5.9 | CB-B | DP-3 | TMU | 0.3 | NMP |

**[Table 4]**

| | Thermal Resistance (5% weight loss temperature) | Optical Density (OD Value) |
|---|---|---|
| Example 6 | Higher than 420 °C | 3 |
| Example 7 | Higher than 400 °C | 3 |
| Example 8 | Higher than 400 °C | 3 |
| Example 9 | Higher than 420 °C | 3 |
| Example 10 | Higher than 440 °C | 3 |
| Example 11 | Higher than 440 °C | 3 |
| Example 12 | Higher than 420 °C | 3 |
| Example 13 | Higher than 420 °C | 3 |
| Example 14 | Higher than 420 °C | 3 |
| Example 15 | Higher than 420 °C | 3 |
| Example 16 | Higher than 450 °C | 3 |
| Example 17 | Higher than 370 °C | 3 |
| Example 18 | Higher than 430 °C | 3 |
| Example 19 | Higher than 370 °C | 3 |
| Example 20 | Higher than 330 °C | 3 |
| Comparative Example 8 | Lower than 300 °C | 1 |

Referring to Tables 3 and 4, it is found that the black shaped body formed by heating the black compositions of Examples 6 to 20, which contain the base material, the carbon black dispersion containing the carbon black dispersed in N,N,N',N'-tetramethyl urea by the polyamic acid, and the thermal imidazole generator, at a temperature higher than the temperature at which the thermal imidazole generator generates an imidazole compound contains well-dispersed carbon black and is high in optical density and superior in thermal resistance.

According to Comparative Example 8, even if the black composition includes the base material, the carbon black dispersion containing the carbon black dispersed in N,N,N',N'-tetramethyl urea, and the thermal imidazole generator of a predetermined structure, formation of the black shaped body high in optical density and superior in thermal resistance is difficult if the carbon black is not dispersed by the polyamic acid. As a result of observation of the cured film formed by using the black composition of Comparative Example 8, aggregation of the carbon black in the cured film was observed.

## Claims

1. A carbon black dispersion comprising: carbon black; polyamic acid; and a solvent containing N,N,N',N'-tetramethyl urea, wherein a carbon black content in a solid content is 50 to 99% by mass.

2. The carbon black dispersion according to claim 1, wherein the carbon black has been processed to introduce an acidic group.

3. A black composition comprising a base material and the carbon black dispersion according to claim 1 or 2, wherein the carbon black content in a solid content is 0.1 to 40% by mass.

4. The black composition according to claim 3, wherein the base material is polyamic acid.

5. A dispersion method of carbon black, comprising: blending carbon black and polyamic acid into a solvent containing N,N,N',N'-tetramethyl urea such that the carbon black content in a solid content is 50 to 99% by mass; and then dispersing the carbon black in the solvent.

6. The dispersion method of the carbon black according to claim 5, wherein the carbon black has been processed to introduce an acidic group.

## Patentansprüche

1. Rußdispersion, umfassend Ruß; Polyaminsäure; und ein Lösungsmittel, das N,N,N',N'-Tetramethylharnstoff enthält, wobei ein Rußgehalt in einem Feststoffgehalt 50 bis 99 Massen-% beträgt.

2. Rußdispersion nach Anspruch 1, wobei der Ruß bearbeitet wurde, um eine Säuregruppe einzuführen.

3. Schwarze Zusammensetzung, umfassend ein Basismaterial und die Rußdispersion nach Anspruch 1 oder 2, wobei der Rußgehalt in einem Feststoffgehalt 0,1 bis 40 Massen-% beträgt.

4. Schwarze Zusammensetzung nach Anspruch 3, wobei das Basismaterial Polyaminsäure ist.

5. Dispersionsverfahren für Ruß, umfassend: Mischen von Ruß und Polyaminsäure in einem Lösungsmittel, das N,N,N',N'-Tetramethylharnstoff enthält, so dass der Rußgehalt in einem Feststoffgehalt 50 bis 99 Massen-% beträgt; und anschließend Dispergieren des Rußes in dem Lösungsmittel.

6. Dispersionsverfahren für Ruß nach Anspruch 5, wobei der Ruß bearbeitet wurde, um eine Säuregruppe einzuführen.

## Revendications

1. Dispersion de noir de carbone comprenant: du noir de carbone; de l'acide polyamique ; et un solvant contenant de la N,N,N',N'-tétraméthylurée, dans laquelle une teneur en noir de carbone dans une teneur en matière solide totale est de 50 à 99 % en masse.

2. Dispersion de noir de carbone selon la revendication 1, dans laquelle le noir de carbone a été traité pour introduire un groupe acide.

3. Composition noire comprenant un matériau de base et la dispersion de noir de carbone selon la revendication 1 ou 2, dans laquelle la teneur en noir de carbone dans une teneur en matière solide totale est de 0,1 à 40 % en masse.

4. Composition noire selon la revendication 3, dans laquelle le matériau de base est un acide polyamique.

5. Procédé de dispersion de noir de carbone, comprenant : le mélange de noir de carbone et d'acide polyamique dans un solvant contenant de la N,N,N',N'-tétraméthylurée de sorte que la teneur en noir de carbone dans une teneur en matière solide totale soit de 50 à 99 % en masse ; puis la dispersion du noir de carbone dans le solvant.

6. Procédé de dispersion du noir de carbone selon la revendication 5, dans lequel le noir de carbone a été traité pour introduire un groupe acide.
